# EUROPEAN PATENT APPLICATION

(11) **EP 4 726 587 A1**
(43) Date of publication of application: **15.04.2026**
(21) Application number: 25207942.1
(22) Date of filing: 10.10.2025
(51) Int. Cl.: G06F 21/55, G06N 20/00, H04L 9/40

(54) **AN ANTI-FRAUD METHOD BASED ON THE ANALYSIS OF WEB AND MOBILE APPLICATION SESSIONS WITH THE AID OF GENERATIVE-TYPE ARTIFICIAL INTELLIGENCE**

(30) Priority: 10.10.2024 IT 202400022539
(71) Applicant: Cleafy Società per Azioni, 20123 Milano (MI) (IT)
(72) Inventor: Giangregorio, Carmine, 20158 Milano MI (IT); Pastore, Nicolò, 20158 Milano MI (IT)
(74) Representative: Perani & Partners S.p.A.

(57) **Abstract**

Anti-fraud method based on the analysis of web and mobile application sessions with the aid of generative-type artificial intelligence, comprising the steps of: i) detecting at least one event in a web or mobile application session; ii) extracting at least one punctual and deterministic indicator of compromise, behaviour and/or generic analysis for each of said at least one event detected; iii) generating a specific Prompt by associating with each of said at least one punctual and deterministic indicator with a textual description of the same; iv) providing an instructional Prompt comprising a textual description of the domain knowledge; V) generating a final Prompt by merging the specific Prompt and the instructional Prompt; vi) generating an overall description of the detected events by textual analysis of the final Prompt by means of a generative-type artificial intelligence algorithm (4).

## Description

### FIELD OF APPLICATION

The present invention relates to an anti-fraud method based on the analysis of web and mobile application sessions with the aid of generative-type artificial intelligence. An example of a web or mobile application session is a session related to web or mobile applications for home banking.

In detail, the method of the invention allows web and mobile application sessions to be analyzed in real time in order to identify and explain possible frauds, suggesting operations to combat them through the use of generative-type artificial intelligence systems or, more briefly, generative AI.

### Description of the prior art

It is known in the art to implement a passive and real-time traffic monitoring system in a web or mobile application session. This allows to obtain information on the application session traffic in order to identify any frauds or threats, without the fraudster or attacker being made aware of such monitoring. This makes it possible to be able to monitor and combat attacks without the knowledge of the fraudster/attacker, with an obvious operational advantage.

In the state of the art, document US 2024/291850 A1 is known, which describes a computer-implemented method for establishing connectivity with a plurality of security-relevant subsystems within a computing platform. The methos includes receiving an initial notification of a security event from one of the security-relevant subsystems, wherein the initial notification includes a computer-readable language portion that defines one or more specifics of the security event. The methos includes processing the initial notification using a generative AI model and a formatting script to produce a summarized human-readable report (AI output) for the initial notification. The summarized human-readable report defines one or more recommended next steps. The methos includes automatically executing some or all of the recommended next steps to define one or more recommended actions. Briefly, this method uses generative AI as an add-on to generate a human-readable summary report following an initial security notification, and uses external tools, such as a domain/IP lookup, to extract further information.

### Problem of the prior art

In the prior art, monitoring is performed in a mixed manner, i.e. first by automatically collecting data from traffic analysis in the web or mobile application session. Subsequently, these data must be viewed and analyzed by an analyst expert in cyber security and anti-fraud, in order to be able to identify any frauds or threats, and then combat or classify them in the event of new types of attack never found before.

It is evident that this monitoring, although carried out in real time at least for the first step of automatic data collection, must then be carried out by human operators. The analysis is particularly complex and requires considerable experience in the sector. In addition, the amount of data to be analyzed would require an incredibly high number of operators or require endless times in order to be able to analyze all the traffic of the countless web or mobile application sessions related to one or more web or mobile applications. In fact, real-time monitoring is currently not feasible and this gives the attacker/fraudster a significant advantage of action linked precisely to the delay in both the identification of the threat/fraud and the implementation of any countermeasures.

The method described in document US 2024/291850 A1 is purely reactive. In fact, this method only acts when a security event is detected. Specifically, the method analyzes only what has already been labeled as suspicious, thereby ignoring all complex threats that are not identified by a single IoC (Indicator of Compromise).

### SUMMARY OF THE INVENTION

Aim of the invention in question is to realize a method that allows to overcome the limits of the prior art, providing a detailed analysis of the traffic of the web or mobile application session in real time.

The technical task mentioned and the objects stated are substantially achieved by a method comprising the technical features set out in one or more of the appended claims.

### Advantages of the invention

Thanks to an embodiment, it is possible to obtain a method that allows to analyze the traffic of a web or mobile application session in real time by providing a detailed description of all the events detected in the monitored session.

Thanks to an embodiment, it is possible to realize a method that provides indications on the countermeasures to be implemented to combat any frauds or threats detected by the analysis of the application traffic.

Thanks to an embodiment, it is possible to realize a method that allows to provide a detailed description of the patterns of events detected within a web or mobile application session, so as to be able to detect possible fraud or threat scenarios.

### BRIEF DESCRIPTION OF THE DRA WINGS

The characteristics and advantages of the present invention will become clear from the following detailed description of a possible practical embodiment, illustrated by way of non-limiting example in the set of drawings, wherein:
- figure 1 shows a flowchart of the steps of the method according to the present invention,
- figure 2 shows a schematic representation of an example of system architecture for the application of the method of the invention.

### DETAILED DESCRIPTION

Even if not explicitly highlighted, the individual features disclosed with reference to the specific embodiments shall be understood as accessory to and/or interchangeable with other features disclosed with reference to other embodiments.

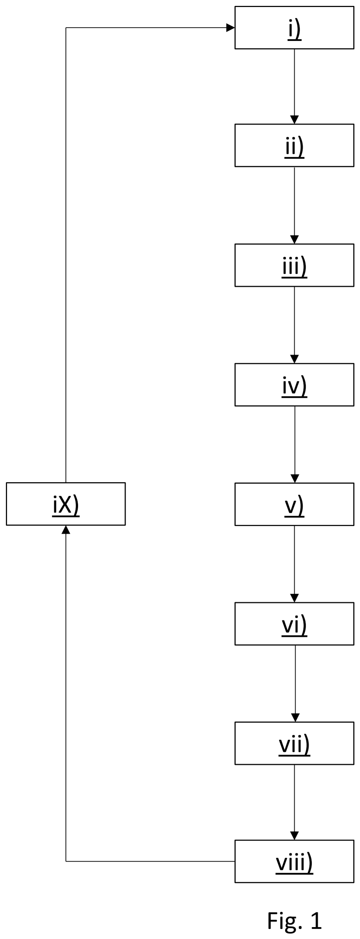

The present invention relates to an anti-fraud method based on the analysis of web and mobile application sessions with the aid of generative-type artificial intelligence. An example of flowchart of the steps of the method of the invention is illustrated in figure 1.

The method comprises step i) of detecting at least one event in a web or mobile application session by analyzing the application session traffic between a web server 1 where a web or mobile application 2 resides and at least one client device 3.

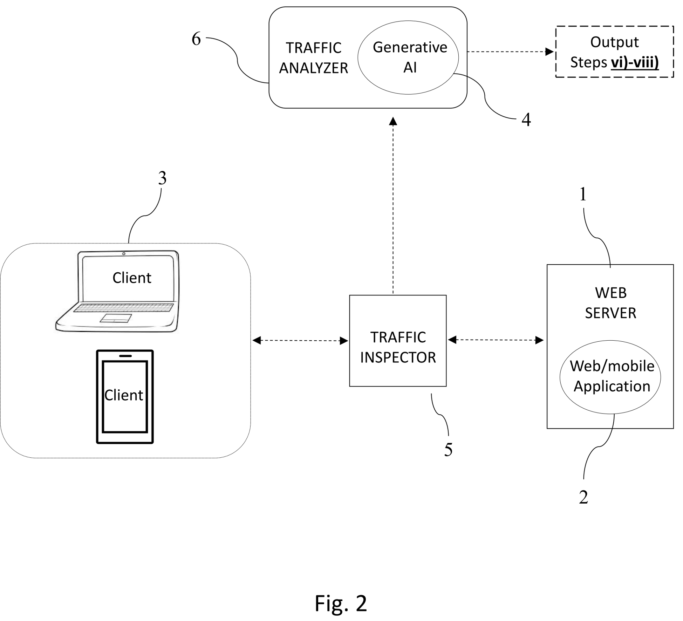

Preferably, step i) of detecting at least one event in a web or mobile application session involves analyzing the application session traffic between the web server 1 and the at least one client device 3 streaming and passively. An example of a system for implementing the method according to the present invention is illustrated in figure 2. For example, the web or mobile application 2 to be monitored is relative to a home banking service from which a user, by means of their client device 3, preferably a smartphone, tablet or laptop, can perform a series of financial operations such as online payments, bank transfers, etc. Preferably, the streaming analysis of the application traffic is carried out passively by means of a stream server of known type that intercepts the traffic between the web server 1 and the client device 3. Still preferably, the stream server comprises a traffic inspector 5 adapted to intercept the application traffic between web server 1 and client device 3 and a traffic analyzer 6 in signal communication with the traffic inspector 5. In the traffic analyzer 6 a generative-type artificial intelligence algorithm 4 resides, which is adapted to analyze the intercepted application traffic as will be described below, so as to be able to provide as an output of the method at least a detailed description of the same monitored web or mobile application session. The base architecture of the system for performing the method of the present invention is known to the person skilled in the art and therefore will not be further detailed. However, it should be specified that the use of generative AI in this architecture is particularly innovative with respect to the known technique.

Still preferably, the at least one event comprises one or more selected from a web page opening event within the application session, a navigation event following a link, a user login event within the web or mobile application 2, an online payment entry event an online payment authorization event, aweb or mobile application startup or shutdown event 2, optionally there may also be events of the type of password change, addition of a new recognized client device 3, execution of a scan of the client device to identify malicious applications installed.

In addition, the method comprises the step ii) of extracting at least one punctual and deterministic indicator of compromise, behaviour and/or generic analysis for each of said at least one event detected within the application session.

The method also comprises step iii) of generating a specific Prompt by associating each of said at least one extracted punctual and deterministic indicator with a predetermined textual description of the same and providing a summary textual description of the entire analyzed application session.

The method comprises step iv) of providing an instructional Prompt comprising a textual description of the domain knowledge in the anti-fraud and cybersecurity sector for the analyzed application session.

Further, the method comprises step V) of generating a final Prompt by merging the specific Prompt and the instructional Prompt. That is to say, the two textual elements of the specific Prompt and the instructional Prompt are merged.

In addition, the method comprises step vi) of generating an overall description of the detected events by analyzing the application session traffic by textual analysis of the final Prompt by means of a generative-type artificial intelligence algorithm 4. In other words, the final prompt is given as input to the generative AI.

In accordance with a preferred form of the invention, step vi) of generating an overall description of the detected events also involves detecting any possible fraudulent events. Preferably, step vi) of generating an overall description of the detected events also involves providing countermeasures for any possible detected fraudulent events.

According to a preferred form of the invention, step vi) of generating an overall description of the detected events also involves providing a description of at least one pattern of events and/or anomalies of events of possible detected frauds or threats, according to the joint analysis of all events detected in step i) of detecting at least one event in the web or mobile application session. Preferably, step vi) of generating an overall description of the detected events also involves suggesting at least one action to be taken to limit or block the at least one pattern of events and/or anomalies of events of possible detected frauds or threats. Still preferably, the at least one action to be taken to limit or block the at least one pattern of events and/or anomalies of events of possible detected frauds or threats comprises one or more actions selected from creating a deterministic rule to identify similar patterns in the traffic analysis and performing predetermined actions, such as preferably one or more of blocking the application user, blocking the fraud operation, opening a report requiring human review, resetting user credentials or passwords.

In accordance with a preferred solution of the invention, the method comprises the further step vii) of generating rules to automatically label future patterns of events and/or anomalies of events of possible frauds or threats similar to the at least one pattern of events and/or anomalies of events of possible detected frauds or threats that has been described, by textual analysis of the description of the at least one pattern of events and/or anomalies of events of possible detected frauds or threats by means of the generative-type artificial intelligence algorithm 4.

According to a preferred form, step i) of detecting at least one event in a web or mobile application session involves detecting a plurality of events linked to one another by one or more specific elements and/or linked to one another by using a specific tracing ID.

In accordance with a preferred form of the invention, step i) of detecting at least one event in a web or mobile application session involves detecting every event within the same web or mobile application session.

In accordance with a preferred solution, step iv) of providing an instructional Prompt involves integrating into the instructional prompt the description of at least one real case, each containing at least: an example of a real fraud/threat case explained in a descriptive manner; a description of the specific technique the attacker/fraudster has used, such as preferably an ATO-, ATS-, Phishing-type attack; a description of the possible best approach to mitigate the specific technique the attacker/fraudster has used.

Preferably, the method comprises the further step viii) of generating one or more punctual and deterministic indicators adapted to indicate complex fraud and threat scenarios by the joint analysis of the at least one punctual and deterministic indicator extracted from step ii) and of the instructional Prompt provided in step iv) by means of the generative-type artificial intelligence algorithm 4.

According to a preferred form of the invention, the method comprises the further step iX) of repeating at least steps i) to vi) for each subsequent web or mobile application session. This advantageously allows to create a retroactive approach that allows for example to update from time to time the punctual and deterministic indicators and the descriptive textual elements that are associated with the same indicators to generate the specific Prompt, as well as the instructional Prompt.

The present invention represents a methodology of automated analysis of the network traffic from web or mobile applications, for detecting potential frauds and cyber threats in general, with the aim of providing an accurate description of the fraud/threat and procedures to implement a countermeasure, or remediation, to be implemented manually or in an automated manner of the same.

As described above, the method is structured to carry out the real-time analysis of the application traffic by subsequent extraction of indicators. The method of real-time analysis of the application traffic extracts punctual and deterministic indicators, also called Tags, of compromise, behaviour or generic analysis for each event that occurred within the application session. An event in this context can represent, for example: the opening of a web page, browsing following a link, a user login, a payment entry, startup or shutdown of a mobile application, etc.

The method subsequently provides for enriching the indicators with a textual description of the same merged with a summary textual description of the entire application session in question, in order to obtain the generation of the specific Prompt.

Finally, the method involves using specific prompts and domain knowledge to perform the extended analysis. In detail, the specific Prompt is merged with a textual description of the domain knowledge, called Instructional Prompt. The resulting final prompt is then used for inference through generative AI models 4, such as Large Language Model or advanced Natural Language Processing systems), in order to receive an overall description of the entire pattern (or patterns) detected by analyzing the application traffic, preferably suggesting procedures for manual or automated remediation.

Advantageously, a distinctive feature of the invention is the ability to automatically merge deterministic decision-making processes with complete explainability, that is, all the modules aimed at generating Tags, which generate results that can be interpreted by an end user with domain knowledge, to generative processes and which allow decision-making processes to be automated even in the absence of domain-specific knowledge on the part of the end user. It should be pointed out here that, given the complexity of the method of the present invention, it cannot be considered as a mere automation of human mental processes. In fact, the output of the present method is in no way replicable by human operators at least for the reasons set out above. An analyst with domain knowledge in the anti-fraud and cybersecurity sector is, in fact, potentially able to analyze, understand and propose countermeasures based on the results of step ii), i.e. the generation of so-called Tags, but this process is not directly replicable and is not scalable to large amounts of data, which would make the analyst himself the bottleneck as the events and application sessions to be analyzed increase.

Still advantageously, in a possible implementation of the invention, the analysis is carried out not only for the individual events, but also on the entire application session, grouping together the extracted events and identifying patterns and anomalies on the basis of the joint analysis of all the events.

Still advantageously, in a possible implementation of the invention, in addition to providing manual remediation, such as by explaining the result of the analysis of the Tags in input, the identification of one or more patterns of possible fraud or threat, and suggesting an action to be taken to limit or block the threat, the generative AI 4 can be configured to provide automatic remediation, such as by creating a deterministic rule to identify similar patterns on the traffic analysis and perform predetermined actions, such as blocking the application user or the fraud operation.

An example of application of the method according to the present invention is described below.

### EXAMPLE

An example of real-time analysis of the application traffic and extraction of indicators, according to steps i) and ii), is first provided.

The application traffic is analyzed streaming, passively with respect to the operation of the monitored web or mobile application 2, and events are extracted grouped into application sessions. An example of an event can be a web page opening within the application, as well as a login event within the application. A session is composed of one or more events, linked to one another by one or more specific elements or linked to one another by using a specific tracing ID, in order to be able to monitor also cases of sessions in which there are several different specific elements, such as multiple IP addresses from which the events are generated, multiple application users who have logged in in the same application session, etc.

The analysis methodology is composed of a series of modules, each of which operates in parallel with the others and results in one or more punctual and deterministic indicators of compromise, behaviour and/or generic analysis, called Tags, which represent the textual description of a potential compromise, behaviour or generic characteristic of the event in question. Such Tags can be considered exemplarily as a form of annotation and classification of what has been detected within each single event and/or connected session. Such modules may optionally be configurable by the analyst, generating one or more custom Tags based on rules that are executed within the monitoring method.

Description of the event detected in step i) according to the example: a navigation is carried out on a "Login" web page of the application and the login is performed. There is a compromise of the application code detected during traffic analysis, and the application user has an anomalous behaviour as he has performed the entire navigation without ever using the mouse.

Indicators in output from step ii) according to the example, i.e. the following tags:
NAVIGATED_WEB_LOGIN,
LOGIN_SUCCESSFUL,
PAGE_INTEGRITY_COMPROMISED,
ANOMALOUS_BEHAVIOR,
NO_MOUSE_MOVEMENTS_DETECTED.

An example of enrichment of the indicators and generation of the specific Prompt according to step iii) is now described.

The indicators extracted in step ii) are enriched with a series of textual descriptions of the same, also including any examples and details of the event and/or session, generating a single complete textual description defined as a specific Prompt.

The example of enrichment of the indicators is shown in Table 1 below. Compared to what was seen in output of step ii), the individual indicators are extended as follows.

**Table 1. Example of enrichment of the indicators or Tags.**

| Indicator or Tag | Description |
|---|---|
| NAVIGATED_WEB_LOGIN | A web type navigation was performed with destination to the login page within the application. |
| LOGIN_SUCCESSFUL | The application login has been successful and the application user is confirmed. |
| PAGE_INTEGRITY_COMPROMISED | The integrity of the web page is compromised. This may indicate the modification or addition of alien code within the web page that was not originally present on the page generated by the server. |
| ANOMALOUS_BEHAVIOR | In general, anomalous user behaviour has been identified in relation to the event in question. |
| NO_MOUSE_MOVEMENTS_DETECTED | No user mouse movement was detected within the event. This could indicate the use of an automated system to carry out navigation or could be a symptom of compromise. |

The enriched indicators are then entered into a broader description that also contains any characteristic elements of the event or session itself. Below is the example of the complete specific Prompt:
*The session you are analyzing contains a number of events equal to 3.*
*The number of application users who have logged in is equal to 1.*
*The event you are analyzing concerns a banking web application.*
*A web type navigation was performed with destination to the login page within the application.*
*The application login has been successful and the application user is confirmed*
*The integrity of the web page is compromised. This may indicate the modification or addition of anomalous code within the web page that was not originally present on the page generated by the server.*
*No user mouse movement was detected within the event.*
*This could indicate the use of an automated system to carry out navigation or could be a symptom of compromise.*
*In general, anomalous user behaviour has been identified in relation to the event in question.*

The example of execution of steps iv) to vi) is now described, by using specific Prompts and domain knowledge for extended analysis.

The specific Prompt is merged with an instructional Prompt with steps iV) and v), and the overall input, i.e. the final Prompt, is used for inference using generative AI 4, such as Large Language Models and the like, in order to obtain an overall analysis of the indicators, the event and/or the entire session under consideration, possibly suggesting one or more remediation strategies. The instructional prompt can be extended and evolved over time manually, such as by a team of Threat Intelligence analysts, or automatically, such as by automatically collecting new cases and examples of threats, frauds and compromise techniques.

In its inside, in addition to descriptions and base knowledge of the characteristics common to frauds and cybersecurity threats, the Instructional Prompt may contain a variable number of real example cases, each of which contains at least one or more of:
- The example of a case of fraud/real threat, explained in a descriptive manner;
- What the specific technique was the attacker/fraudster used, for example ATO, ATS, Phishing type attack, etc.;
- What the best possible approach is to mitigate this type of attack.

Once the aforementioned steps have been completed, the output provided by the generative AI system in step vi) can possibly be filtered and adapted so that it can be shown directly to the end user in order to enrich the deterministic analysis of the application traffic. In a possible implementation of the invention, the generative AI system can provide for the generation of rules to automatically label future patterns similar to the one analyzed. In addition, in a possible implementation of the invention, the generative AI system can produce as a result a new set of indicators, or Tags, that indicate complex fraud and threat scenarios, based on the joint analysis of the deterministic indicators generated in step ii) with analysis of the examples of fraud and threats merged with the domain knowledge referred to in step iv). Finally, the end user can directly provide new examples of frauds and real threats, in order to optimize the method on specific use cases for their type of monitored application. In addition, the end user can evaluate the results generated as a result of step vi) in order to indicate to the system the quality of the results obtained and optimise in a supervised manner both the generation of the specific Prompt, referred to in step iii) and the instructional Prompt, referred to in step iv).

Advantageously, the method of the present invention differs from the prior art primarily in that it analyzes the entire session traffic, i.e., the entire user journey, including even the most common and completely legitimate operations, such as login, navigation, etc., and also includes any pre-analysis performed by deterministic modules with output indicators such as Tags. In short, the entire detection procedure is based on user behavior analysis. This approach allows for the detection of sophisticated fraud patterns, composed of a series of actions that, taken individually, would not be indicators of compromise, such as scams where there is no malware or compromise.

Advantageously, the method of the invention explicitly creates two separate text prompts: i) a "specific" one with session data and all other relevant context, and ii) an "instructional" one with domain knowledge. These are then combined into a single prompt that serves as input for the generative AI. Specifically, the method involves engineering the input to guide the analysis, making it as specific and structured as possible, rather than relying solely on the "classic" training of a Large Language Model (LLM) as is done in the prior art.

## Claims

1. An anti-fraud method based on the analysis of web and mobile application sessions with the aid of generative-type artificial intelligence, comprising the steps of:
i) detecting at least one event in a web or mobile application session by analyzing the application session traffic between a web server (1) where a web or mobile application (2) resides and at least one client device (3);
ii) extracting at least one punctual and deterministic indicator of compromise, behaviour and/or generic analysis for each of said at least one event detected within the application session;
iii) generating a specific Prompt by associating each of said at least one extracted punctual and deterministic indicator with a textual description of the same and providing a summary textual description of the entire analyzed application session;
iv) providing an instructional Prompt comprising a textual description of the domain knowledge in the anti-fraud and cybersecurity sector for the analyzed application session;
v) generating a final Prompt by merging the specific Prompt and the instructional Prompt;
vi) generating an overall description of the detected events by analyzing the application session traffic by textual analysis of the final Prompt by means of a generative-type artificial intelligence algorithm (4).

2. The method according to claim 1, wherein step vi) of generating an overall description of the detected events also involves detecting any possible fraudulent events.

3. The method according to claim 2, wherein step vi) of generating an overall description of the detected events also involves providing countermeasures for any possible detected fraudulent events.

4. The method according to any one of the preceding claims, wherein step vi) of generating an overall description of the detected events also involves providing a description of at least one pattern of events and/or anomalies of events of possible detected frauds or threats, according to the joint analysis of all events detected in step i) of detecting at least one event in the web or mobile application session.

5. The method according to claim 4, wherein step vi) of generating an overall description of the detected events also involves suggesting at least one action to be taken to limit or block the at least one pattern of events and/or anomalies of events of possible detected frauds or threats.

6. The method according to claim 5, wherein the at least one action to be taken to limit or block the at least one pattern of events and/or anomalies of events of possible detected frauds or threats comprises one or more actions selected from creating a deterministic rule to identify similar patterns in the traffic analysis and performing predetermined actions, such as preferably one or more of blocking the application user, blocking the fraud operation, opening a report requiring human review, resetting user credentials or passwords.

7. The method according to any one of claims 4 to 6, comprising the further step of: vii) generating rules to automatically label future patterns of events and/or anomalies of events of possible frauds or threats similar to the at least one pattern of events and/or anomalies of events of possible detected frauds or threats that has been described, by textual analysis of the description of the at least one pattern of events and/or anomalies of events of possible detected frauds or threats by means of the generative-type artificial intelligence algorithm (4).

8. The method according to any one of the preceding claims, wherein step i) of detecting at least one event in a web or mobile application session involves detecting a plurality of events linked to one another by one or more specific elements and/or linked to one another by using a specific tracing ID.

9. The method according to any one of the preceding claims, wherein step i) of detecting at least one event in a web or mobile application session involves analyzing the application session traffic between the web server (1) and the at least one client device (3) streaming and passively.

10. The method according to any one of the preceding claims, wherein step i) of detecting at least one event in a web or mobile application session involves detecting every event within the same web or mobile application session.

11. The method according to any one of the preceding claims, wherein the at least one event comprises one or more selected from a web page opening event within the application session, a navigation event following a link, a user login event within the web or mobile application (2), an online payment entry event, a web or mobile application startup or shutdown event (2), an online payment authorization event, a password change event, an addition event of a new recognized client device (3), an execution event of a scan of the client device (3) to identify malicious applications installed.

12. The method according to any one of the preceding claims, wherein step iv) of providing an instructional Prompt involves integrating into the instructional prompt the description of at least one real case, each containing at least: an example of a real fraud/threat case explained in a descriptive manner; a description of the specific technique the attacker/fraudster has used, such as preferably an ATO-, ATS-, Phishing-type attack; a description of the possible best approach to mitigate the specific technique the attacker/fraudster has used.

13. The method according to claim 12, comprising the further step of:
viii) generating one or more punctual and deterministic indicators adapted to indicate complex fraud and threat scenarios by the joint analysis of the at least one punctual and deterministic indicator extracted from step ii) and of the instructional Prompt provided in step iv) by means of the generative-type artificial intelligence algorithm (4).

14. The method according to any one of the preceding claims, comprising the further step of:
iX) repeating at least steps i) to vi) for each subsequent web or mobile application session.
